# EUROPEAN PATENT APPLICATION

(11) **EP 4 135 470 A1**
(43) Date of publication of application: **15.02.2023**
(21) Application number: 21797291.8
(22) Date of filing: 31.03.2021
(51) Int. Cl.: H04W 76/14, H04W 4/70

(54) **WIRELESS CONNECTION PROVIDING SYSTEM, METHOD, AND ELECTRONIC APPARATUS**

(30) Priority: 30.04.2020 CN 202010363772
(71) Applicant: Huawei Technologies Co., Ltd., Shenzhen, Guangdong 518129 (CN)
(72) Inventor: WANG, Tongbo, Shenzhen, Guangdong 518129 (CN); DING, Ji, Shenzhen, Guangdong 518129 (CN); WANG, Liping, Shenzhen, Guangdong 518129 (CN); DING, Guozhi, Shenzhen, Guangdong 518129 (CN); SHI, Tian, Shenzhen, Guangdong 518129 (CN)
(74) Representative: Huawei European IPR
(86) International application number: PCT/CN2021/084335
(87) International publication number: WO 2021/218544

(57) **Abstract**

This application relates to the field of communications technologies, and provides a system and method for providing wireless network access, and an electronic device. The system includes a first electronic device and a second electronic device. The first electronic device is configured to: receive a first operation of a user, where the first operation is used to share or project first data in the first electronic device to the second electronic device; establish a Wi-Fi direct connection to the second electronic device in response to the first operation; and receive a second operation of the user, where the second operation is used to enable a network sharing function of the first electronic device. The second electronic device is configured to: receive the first data from the first electronic device; and perform data receiving and sending with a network side by using the network sharing function of the first electronic device. In embodiments of this application, a network access capability of the first electronic device is shared with the second electronic device through a convenient operation of the user, so that the second electronic device obtains a network access capability.

## Description

This application claims priority to Chinese Patent Application No. 202010363772.7, filed with the China National Intellectual Property Administration on April 30, 2020 and entitled "SYSTEM AND METHOD FOR PROVIDING WIRELESS NETWORK ACCESS, AND ELECTRONIC DEVICE", which is incorporated herein by reference in its entirety.

### TECHNICAL FIELD

This application relates to the field of communications technologies, and in particular, to a system and method for providing wireless network access, and an electronic device.

### BACKGROUND

With continuous development of communications technologies and terminal technologies, scenarios in which electronic devices need to access a network increase, and interconnection and interworking of electronic devices attract more attention of people.

Currently, a manner in which an electronic device accesses the Internet includes a manner of accessing a mobile communications network and a manner of accessing a wireless local area network (Wireless Local Area Network, WLAN). The mobile communications network is usually referred to as a cellular mobile network, and includes but is not limited to a Global System for Mobile Communications (Global System for Mobile communications, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), time-division code division multiple access (time-division code division multiple access, TD-SCDMA), and the like. The WLAN includes a wireless fidelity (wireless fidelity, Wi-Fi) network and the like.

The mobile communications network covers a wide area, and brings convenience to our life. However, popularization of the mobile communications network mainly focuses on electronic devices such as handheld mobile terminals, and charging is high. The WLAN provides coverage only for homes, enterprises, and a few public places. The coverage area is limited, and user costs are low.

Therefore, it is urgent to improve collaboration in interworking and network access between products to meet increasing user demands for network access.

### SUMMARY

Embodiments of this application provide a system and method for providing wireless network access, and an electronic device, to resolve a problem that electronic devices cannot access a network cooperatively in a related technology.

According to a first aspect, an embodiment of this application provides a system for providing wireless network access, where the system includes a first electronic device and a second electronic device.

The first electronic device is configured to:
receive a first operation of a user, where the first operation is used to share or project first data in the first electronic device to the second electronic device;
establish a Wi-Fi direct connection to the second electronic device in response to the first operation; and
receive a second operation of the user, where the second operation is used to enable a network sharing function of the first electronic device.

The second electronic device is configured to:
receive the first data from the first electronic device; and
perform data receiving and sending with a network side by using the network sharing function of the first electronic device.

In the embodiment of the first aspect, a network access capability of the first electronic device is shared with the second electronic device through a convenient operation of the user, so that the second electronic device obtains a network access capability.

In an implementation of the first aspect, the first operation includes an operation of selecting the first data, an operation of enabling a sharing control, and an operation of selecting the second electronic device as a receiving device.

In an example of an implementation of the first aspect, in the display interface for displaying the first data, when receiving an operation such as tapping performed by the user on the sharing control, the first electronic device may display a receiving device list, and receive a receiving device name selected by the user in the receiving device list, for example, the second electronic device. The first electronic device establishes a Wi-Fi direct connection to the second electronic device, and sends the first data to the second electronic device.

In an example of an implementation of the first aspect, in a display interface for displaying the first data, when receiving an operation such as tapping performed by the user on the sharing control, the first electronic device loads an interface including a sharing manner list. For example, the sharing manner list includes Wi-Fi direct (or referred to as WLAN direct), share (share), project, Bluetooth, an instant messaging tool, a third-party inter-transmission tool, or the like. When receiving a sharing manner selected by the user in the sharing manner list, for example, Wi-Fi direct (or referred to as WLAN direct), sharing (share), or projection, the first electronic device may display a receiving device list, and receive a receiving device name selected by the user in the receiving device list, for example, the second electronic device. The first electronic device establishes a Wi-Fi direct connection to the second electronic device, and sends the first data to the second electronic device.

In an implementation of the first aspect, the second operation includes an operation of enabling a network sharing control.

In an implementation of the first aspect, the second operation further includes an operation of entering a correct password.

In an implementation of the first aspect, the first electronic device includes a Wi-Fi module and a routing control module. The Wi-Fi module includes a wide area network WAN interface and a local area network LAN interface. The local area network LAN interface is a Wi-Fi peer-to-peer P2P interface. The first electronic device establishes a Wi-Fi direct connection to the second electronic device through the Wi-Fi P2P interface.

The first electronic device accesses a cellular mobile network or a wireless local area network WLAN through the WAN interface.

The second operation is used to enable a routing control function of the routing control module.

The routing control function includes: if a destination address of second data on the network side that is received from the WAN interface is the second electronic device, forwarding the second data to the Wi-Fi P2P interface, and sending the second data to the second electronic device through the Wi-Fi P2P interface; and if a destination address of third data that is received from the second electronic device through the Wi-Fi P2P interface is the network side, forwarding the third data to the WAN interface, and sending the third data to the network side through the WAN interface.

In an implementation of the first aspect, the first electronic device is further configured to prompt the user of a network sharing status, where the network sharing status includes that cellular mobile network sharing is enabled or WLAN sharing is enabled.

According to a second aspect, an embodiment of this application provides a system for providing wireless network access, where the system includes a first electronic device and a second electronic device.

The first electronic device is configured to:
receive a third operation of a user, where the third operation is used to establish a wireless connection between the first electronic device and the second electronic device, and enable a network sharing function of the first electronic device.

The second electronic device is configured to:
perform data receiving and sending with a network side by using the network sharing function of the first electronic device.

In an implementation of the second aspect, the third operation includes an operation of enabling a network sharing control, or an operation of tapping an NFC area of the first electronic device on an NFC area of the second electronic device.

In an implementation of the second aspect, the third operation further includes an operation of entering a correct password.

In an implementation of the second aspect, the first electronic device includes a Wi-Fi module and a routing control module. The Wi-Fi module includes a wide area network WAN interface and a local area network LAN interface. The local area network LAN interface is a Wi-Fi peer-to-peer P2P interface. The first electronic device establishes a Wi-Fi direct connection to the second electronic device through the Wi-Fi P2P interface.

The first electronic device accesses a cellular mobile network or a wireless local area network WLAN through the WAN interface.

The third operation is used to enable the Wi-Fi P2P interface, establish the Wi-Fi direct connection to the second electronic device through the Wi-Fi P2P interface, and enable a routing control function of the routing control module.

The routing control function includes: if a destination address of second data on the network side that is received from the WAN interface is the second electronic device, forwarding the second data to the Wi-Fi P2P interface, and sending the second data to the second electronic device through the Wi-Fi P2P interface; and if a destination address of third data that is received from the second electronic device through the Wi-Fi P2P interface is the network side, forwarding the third data to the WAN interface, and sending the third data to the network side through the WAN interface.

In an implementation of the second aspect, the first electronic device includes a Wi-Fi module and a routing control module. The Wi-Fi module includes a wide area network WAN interface and local area network LAN interfaces. The local area network LAN interfaces include a Wi-Fi peer-to-peer P2P interface and a soft access point AP interface.

The first electronic device accesses a cellular mobile network or a wireless local area network WLAN through the WAN interface, and the third operation is used to enable the Wi-Fi P2P interface or the soft AP interface, establish a Wi-Fi direct connection to the second electronic device through the Wi-Fi P2P interface or establish a wireless hotspot connection to the second electronic device through the soft AP interface, and enable a routing control function of the routing control module.

The routing control function includes: if a destination address of second data on a cellular mobile network side that is received from the WAN interface is the second electronic device, forwarding the second data to the Wi-Fi P2P interface or the soft AP interface, and sending the second data to the second electronic device through the Wi-Fi P2P interface or the soft AP interface; and if a destination address of third data that is received from the second electronic device through the Wi-Fi P2P interface or the soft AP interface is the network side, forwarding the third data to the WAN interface, and sending the third data to the network side through the WAN interface.

If the first electronic device accesses the cellular mobile network through the WAN interface, the first electronic device enables the soft AP interface in response to a monitored network sharing enabling event, and establishes the wireless hotspot connection to the second electronic device through the soft AP interface; and if the first electronic device accesses the WLAN through the WAN interface, the first electronic device enables the Wi-Fi P2P interface in response to a monitored network sharing enabling event, and establishes the Wi-Fi direct connection to the second electronic device through the Wi-Fi P2P interface.

Alternatively, if the first electronic device accesses the cellular mobile network through the WAN interface, the first electronic device enables the Wi-Fi P2P interface in response to a monitored network sharing enabling event, and establishes the Wi-Fi direct connection to the second electronic device through the Wi-Fi P2P interface; and if the first electronic device accesses the WLAN through the WAN interface, the first electronic device enables the soft AP interface in response to a monitored network sharing enabling event, and establishes the wireless hotspot connection to the second electronic device through the soft AP interface.

In an implementation of the second aspect, the first electronic device is further configured to prompt the user of a network sharing status, where the network sharing status includes that cellular mobile network sharing is enabled or WLAN sharing is enabled.

According to a third aspect, an embodiment of this application provides a method for providing wireless network access, including:
A first electronic device receives a first operation of a user, and establishes a Wi-Fi direct connection to a second electronic device in response to the first operation, where the first operation is used to share or project first data in the first electronic device to the second electronic device.
The second electronic device receives the first data from the first electronic device.

The first electronic device receives a second operation of the user, and enables a network sharing function in response to the second operation, where the second operation is used to enable the network sharing function of the first electronic device.

The second electronic device performs data receiving and sending with a network side by using the network sharing function of the first electronic device.

In an implementation of the third aspect, the first operation includes an operation of selecting the first data, an operation of enabling a sharing control, and an operation of selecting the second electronic device as a receiving device.

In an implementation of the third aspect, the second operation includes an operation of enabling a network sharing control.

In an implementation of the third aspect, the first electronic device includes a Wi-Fi module. The Wi-Fi module includes a wide area network WAN interface and a local area network LAN interface. The local area network LAN interface is a Wi-Fi peer-to-peer P2P interface. The first electronic device accesses a cellular mobile network or a wireless local area network WLAN through the WAN interface.

That a first electronic device receives a first operation of a user, and establishes a Wi-Fi direct connection to a second electronic device in response to the first operation includes:

The first electronic device receives the first operation of the user, and establishes the Wi-Fi direct connection to the second electronic device in response to the first operation through the Wi-Fi P2P interface.

That the second electronic device performs data receiving and sending with a network side by using the network sharing function of the first electronic device includes:
if a destination address of second data on the network side that is received from the WAN interface is the second electronic device, forwarding the second data to the Wi-Fi P2P interface, and sending the second data to the second electronic device through the Wi-Fi P2P interface; and if a destination address of third data that is received from the second electronic device through the Wi-Fi P2P interface is the network side, forwarding the third data to the WAN interface, and sending the third data to the network side through the WAN interface.

According to a fourth aspect, an embodiment of this application provides a method for providing wireless network access, including:
A first electronic device accesses a cellular mobile network or a wireless local area network WLAN.

The first electronic device receives a third operation of a user, establishes a wireless connection to a second electronic device in response to the third operation, and enables a network sharing function.

The second electronic device performs data receiving and sending with a network side by using the network sharing function of the first electronic device.

In an implementation of the fourth aspect, the third operation includes an operation of enabling a network sharing control, or an operation of tapping an NFC area of the first electronic device on an NFC area of the second electronic device.

In an implementation of the fourth aspect, the third operation further includes an operation of entering a correct password.

In an implementation of the fourth aspect, the establishing a wireless connection to a second electronic device in response to the third operation includes:
If the first electronic device accesses the cellular mobile network, the first electronic device establishes a wireless hotspot connection to the second electronic device in response to the third operation; and if the first electronic device accesses the WLAN, the first electronic device establishes a Wi-Fi direct connection to the second electronic device in response to the third operation.

Alternatively, if the first electronic device accesses the cellular mobile network, the first electronic device establishes a Wi-Fi direct connection to the second electronic device in response to the third operation; and if the first electronic device accesses the WLAN, the first electronic device establishes a wireless hotspot connection to the second electronic device in response to the third operation.

According to a fifth aspect, an embodiment of this application provides a method for providing wireless network access, including:
A first electronic device receives a first operation of a user, and establishes a Wi-Fi direct connection to a second electronic device in response to the first operation, where the first operation is used to share or project first data in the first electronic device to the second electronic device.

The first electronic device sends the first data to the second electronic device.

The first electronic device receives a second operation of the user, and enables a network sharing function in response to the second operation, where the second operation is used to enable the network sharing function of the first electronic device, and the network sharing function of the first electronic device is used to implement data receiving and sending between the second electronic device and a network side.

In an implementation of the fifth aspect, the first operation includes an operation of selecting the first data, an operation of enabling a sharing control, and an operation of selecting the second electronic device as a receiving device.

In an implementation of the fifth aspect, the second operation includes an operation of enabling a network sharing control.

In an implementation of the fifth aspect, the second operation further includes an operation of entering a correct password.

According to a sixth aspect, an embodiment of this application provides a method for providing wireless network access, including:
A first electronic device accesses a cellular mobile network or a wireless local area network WLAN.

The first electronic device receives a third operation of a user, establishes a wireless connection to a second electronic device in response to the third operation, and enables a network sharing function, where the network sharing function of the first electronic device is used to implement data receiving and sending between the second electronic device and a network side.

In an implementation of the sixth aspect, the third operation includes an operation of enabling a network sharing control, or an operation of tapping an NFC area of the first electronic device on an NFC area of the second electronic device.

In an implementation of the sixth aspect, the third operation further includes an operation of entering a correct password.

According to a seventh aspect, an embodiment of this application provides a first electronic device for providing wireless network access. The first electronic device receives a first operation of a user, and establishes a Wi-Fi direct connection to a second electronic device in response to the first operation, where the first operation is used to share or project first data in the first electronic device to the second electronic device.

The first electronic device sends the first data to the second electronic device.

The first electronic device receives a second operation of the user, and enables a network sharing function in response to the second operation, where the second operation is used to enable the network sharing function of the first electronic device, and the network sharing function of the first electronic device is used to implement data receiving and sending between the second electronic device and a network side.

According to an eighth aspect, an embodiment of this application provides a first electronic device for providing wireless network access. The first electronic device accesses a cellular mobile network or a wireless local area network WLAN. The first electronic device receives a third operation of a user, establishes a wireless connection to a second electronic device in response to the third operation, and enables a network sharing function, where the network sharing function of the first electronic device is used to implement data receiving and sending between the second electronic device and a network side.

According to a ninth aspect, an embodiment of this application provides an electronic device, including a memory, a processor, and a computer program that is stored in the memory and that can be run on the processor. When the processor executes the computer program, the electronic device is enabled to implement the method according to any one of the fifth aspect or the possible implementations of the fifth aspect, or implement the method according to any one of the sixth aspect or the possible implementations of the sixth aspect.

According to a tenth aspect, an embodiment of this application provides a computer-readable storage medium, where the computer-readable storage medium stores a computer program. When the computer program is executed by a processor, the method according to any one of the fifth aspect or the possible implementations of the fifth aspect is implemented, or the method according to any one of the sixth aspect or the possible implementations of the sixth aspect is implemented.

According to an eleventh aspect, an embodiment of this application provides a computer program product. When the computer program product runs on an electronic device, the electronic device is enabled to perform the method according to any one of the fifth aspect or the possible implementations of the fifth aspect, or perform the method according to any one of the sixth aspect or the possible implementations of the sixth aspect.

It may be understood that for beneficial effects of the second aspect to the eleventh aspect, refer to related descriptions in the first aspect.

### BRIEF DESCRIPTION OF DRAWINGS

FIG. 1A is an application scenario in which an electronic device implements network access according to an embodiment of this application;
FIG. 1B is an application scenario in which an electronic device cannot implement network access according to an embodiment of this application;
FIG. 2A is a schematic diagram of a structure of an electronic device to which a method for providing network access is applicable according to an embodiment of this application;
FIG. 2B is a block diagram of a software structure of an electronic device to which a method for providing network access is applicable according to an embodiment of this application;
FIG. 3A shows an application scenario of a method for providing network access according to an embodiment of this application;
FIG. 3B is a schematic diagram of a scenario in which a mobile phone establishes a wireless connection to a PC in a method for providing network access according to an embodiment of this application;
FIG. 3C is a schematic diagram of an implementation principle of a method for providing network access according to an embodiment of this application;
FIG. 3D is a schematic diagram of a user interface presented by an electronic device for providing network access according to an embodiment of this application;
FIG. 3E is a schematic diagram of a user interface presented by an electronic device for providing network access according to another embodiment of this application;
FIG. 3F is a schematic flowchart of a method for providing network access according to an embodiment of this application;
FIG. 4A shows another application scenario of a method for providing network access according to an embodiment of this application;
FIG. 4B is a schematic diagram of an implementation principle of a method for providing network access according to an embodiment of this application;
FIG. 4C is a schematic diagram of another implementation principle of a method for providing network access according to an embodiment of this application;
FIG. 4D is a schematic flowchart of a method for providing network access according to an embodiment of this application;
FIG. 5A shows still another application scenario of a method for providing network access according to an embodiment of this application;
FIG. 5B is a schematic diagram of an implementation principle of a method for providing network access according to an embodiment of this application; and
FIG. 5C is a schematic flowchart of a method for providing network access according to an embodiment of this application.

### DESCRIPTION OF EMBODIMENTS

In the following descriptions, for illustration instead of limitation, specific details such as a particular system structure and a technology are provided to facilitate a thorough understanding of embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly.

It should be further understood that, in embodiments of this application, "several" and "one or more" refer to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

When used in the specification and the appended claims of this application, the term "include" indicates presence of described features, entireties, steps, operations, elements, and/or components, but does not exclude presence or addition of one or more other features, entireties, steps, operations, elements, components, and/or collections thereof.

As used in the specification and the appended claims of this application, the term "if" may be interpreted as "when", "once", "in response to determining", or "in response to detecting" depending on the context.

In addition, in the descriptions of the specification and appended claims of this application, the terms "first", "second", "third", and the like are merely intended for distinction and description, but shall not be understood as an indication or an implication of relative importance.

Reference to "an embodiment", "some embodiments", or the like described in this specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

To describe the technical solutions of this application, the following uses specific embodiments for description.

In recent years, with continuous development of communications technologies, many handheld mobile terminals may obtain network access capabilities of accessing a mobile communications network and accessing a WLAN.

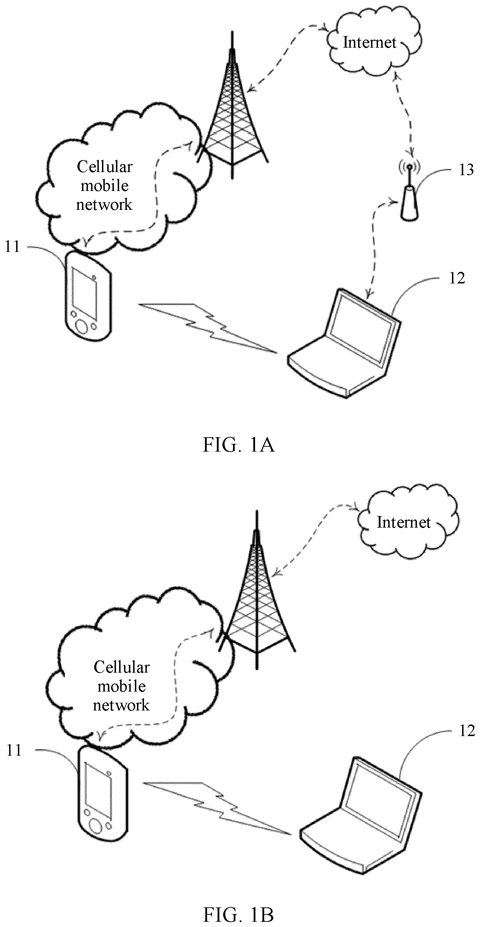

For example, as shown in FIG. 1A, a first terminal 11 including a Wi-Fi module accesses a network by using a cellular mobile network. In addition, the first terminal 11 is further connected, by using a Wi-Fi direct function, to another device 12 including a Wi-Fi module. The first terminal is, for example, a mobile phone, and the another device is, for example, a personal computer (Personal Computer, PC) or a television.

Wi-Fi direct (Wi-Fi Direct) is also referred to as a Wi-Fi peer-to-peer (peer-to-peer, P2P) connection. Wi-Fi direct allows devices on a wireless network to connect to each other without using a wireless router. Content may be mutually transmitted among a plurality of devices that implement Wi-Fi direct. In other words, a Wi-Fi direct technology allows a plurality of Wi-Fi terminals to establish wireless connections at the same time. For example, one Wi-Fi terminal may establish a wireless connection with another Wi-Fi terminal, that is, establish a wireless connection by forming a group in a one-to-one topology form. For another example, one Wi-Fi terminal may establish wireless connections with a plurality of other Wi-Fi terminals at the same time, that is, establish wireless connections by forming a group in a one-to-many topology form. When a connection is established between a first Wi-Fi terminal and a second Wi-Fi terminal by using Wi-Fi P2P, a group owner (Group Owner, GO) and a group client (Group Client, GC) need to be established according to a Wi-Fi direct technical specification. In other words, roles need to be negotiated in a process of establishing a Wi-Fi direct connection. When two Wi-Fi terminals establish a Wi-Fi direct connection, a role of one terminal is GO, and a role of the other terminal is GC.

In an implementation, in the scenario shown in FIG. 1A, the first terminal may access the cellular mobile network by using a cellular base station. In another implementation, the first terminal may access the cellular mobile network by using an access point (Access Point, AP) that is connected to the base station and that provides a hotspot service.

In the scenario shown in FIG. 1A, the Wi-Fi direct connection between the first terminal 11 and the another device 12 may be used to perform peer-to-peer file transfer, or may be used to implement mirror projection. When the another device needs to access the network, the another device needs to access the network in another manner, for example, in a manner of accessing the Internet (Internet) by connecting to a Wi-Fi AP 13.

However, based on the scenario shown in FIG. 1A, when there is no other manner of accessing the Internet such as connecting to a Wi-Fi AP or a wired network around the another device. For example, as shown in FIG. 1B, the another device 12 cannot access the network, and therefore, a network access capability of the device 12 is wasted.

For another example, a user who needs to go on a business trip usually carries a notebook computer in addition to a mobile phone. Because coverage of cellular mobile networks is almost ubiquitous, mobile phones can access the network almost at any time. However, if the notebook computer does not have a cellular mobile network access capability, and is limited by coverage of a WLAN, network access cannot be implemented in a case in which the notebook computer needs to access a network, causing inconvenience to a user.

Therefore, to resolve a problem that in the foregoing two examples, when an electronic device (for example, a mobile phone) has a network access capability and there is no other network access manner around the electronic device (for example, the mobile phone), another device, or referred to as a peer device (for example, a PC), cannot access a network. This application provides a method for providing wireless network access. The method is applied to an electronic device including a Wi-Fi module. In the method, a network access capability of the electronic device is used, and a Wi-Fi P2P wireless communication manner established between the electronic device and a peer device is used to share the network access capability of the electronic device with the peer device, so that the peer device can obtain a network access capability while performing peer-to-peer communication.

The method for providing wireless network access provided in embodiments of this application may be applied to a mobile phone, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), a smart speaker, a television set-top box (set-top box, STB), a television, a smart display, or the like. A specific type of the electronic device is not limited in embodiments of this application.

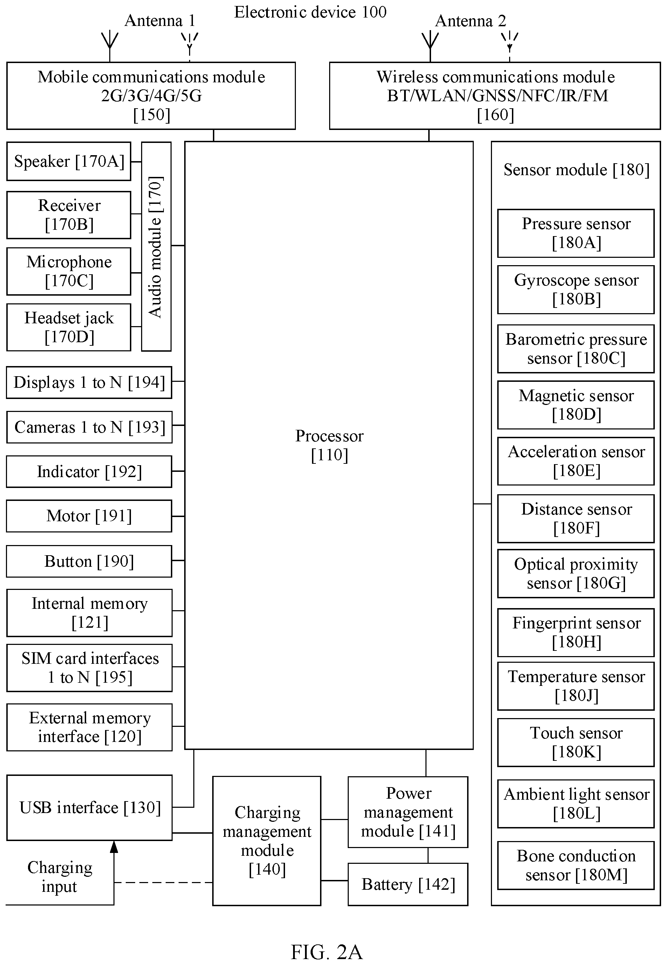

FIG. 2A is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may also transmit an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset, to play audio through the headset. The interface may be further configured to connect to another electronic device such as an AR device.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142 and the charging management module 140 to the processor 110. The power management module 141 receives an input from the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium or high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communications module 150 or another function module.

The wireless communications module 160 may provide a wireless communication solution that includes a WLAN (for example, Wi-Fi), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and that is applied to the electronic device 100. The wireless communications module 160 may be one or more devices integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communications module 150 of the electronic device 100 are coupled, and the antenna 2 and the wireless communications module 160 are coupled, so that the electronic device 100 can communicate with a network and another device by using a wireless communications technology. The wireless communications technology may include a Global System for Mobile Communications (Global System for Mobile Communications, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), time-division code division multiple access (time-division code division multiple access, TD-SCDMA), Long Term Evolution (Long Term Evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite-based augmentation systems (satellite-based augmentation systems, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro OLED, a quantum dot light-emitting diode (quantum dot light-emitting diodes, QLED), or the like. In some embodiments, the electronic device 100 may include one or N displays 194, where N is an integer greater than 1.

The electronic device 100 may implement the photographing function by using the ISP, the camera 193, the video codec, the GPU, the display 194, the application processor, and the like.

The ISP is configured to process data fed back by the camera 193. For example, during photographing, a shutter is pressed, and a ray of light is transmitted to a photosensitive element of a camera through a lens. An optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens and projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or M cameras 193, where M is an integer greater than 1.

The digital signal processor is configured to process a digital signal, and may further process another digital signal in addition to a digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card such as a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer executable program code, and the executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function applications of the electronic device 100 and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing a message is executed. When a touch operation whose touch operation intensity is greater than or equal to a first pressure threshold is performed on a Messages icon, an instruction for creating a new message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor 180E may be further configured to recognize a posture of the electronic device, and is applied in an application such as a pedometer or switching between a landscape mode and a portrait mode.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically perform screen-off for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to avoid abnormal shutdown of the electronic device 100 due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed in the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. The display 194 may provide a visual output related to the touch operation. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input and generate a button signal input related to user settings and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is an integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type, or may be of different types. The SIM card interface 195 is compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

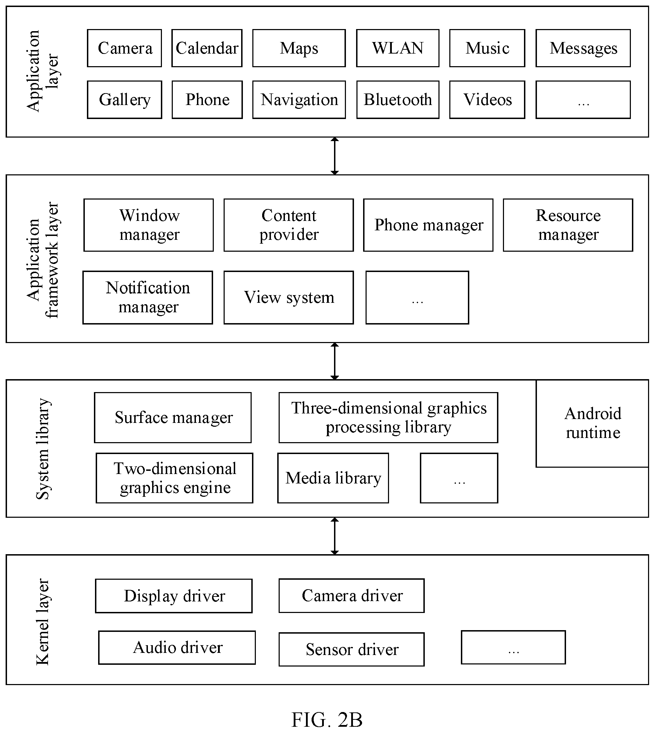

FIG. 2B is a block diagram of a software structure of the electronic device 100 according to an embodiment of this application.

In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer.

The application layer may include a series of application packages.

As shown in FIG. 2B, the application package may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification-type message. The displayed notification information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background, or may be a notification that appears on the screen in a form of a dialog window. For example, text information is displayed in the status bar, an alert sound is played, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language, and a kernel library of Android.

The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes application scenarios and implementation procedures of embodiments of this application by using three non-limiting examples.

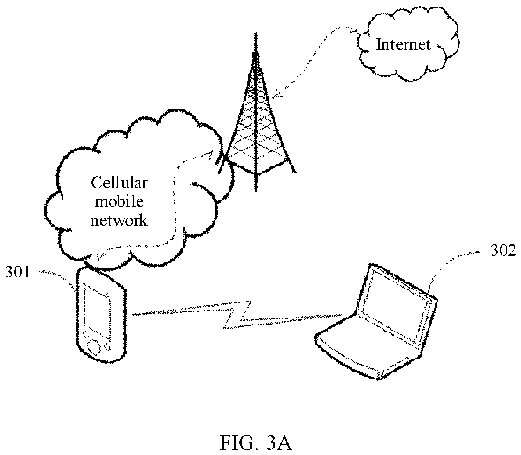

FIG. 3A to FIG. 3F are schematic diagrams of a first application scenario of a method for providing wireless network access according to an embodiment of this application.

As shown in FIG. 3A, in the first application scenario, a mobile phone 301 is connected to a cellular mobile network, and a Wi-Fi direct peer-to-peer communication connection is established between the mobile phone 301 and a PC 302. The mobile phone 301 shares the cellular network with the PC 302 through a Wi-Fi direct wireless connection channel established between the mobile phone 301 and the PC 302, so that the PC 302 has a network access capability.

The mobile phone 301 and the PC 302 establish the Wi-Fi direct wireless connection channel, a role of the mobile phone 301 is a GO, and a role of the PC 302 is a GC.

In some embodiments of this application, after the mobile phone 301 and the PC 302 enable a Bluetooth function and a Wi-Fi function, the mobile phone 301 and the PC 302 may discover a nearby device through Bluetooth. The mobile phone 301 receives a user operation of selecting a file such as a picture, a video, or audio, receives a user operation of tapping a control such as "share" or a control such as "project", may display a nearby receiving device list, and receives a user operation of tapping a target device (such as the PC 302) in the receiving device list. In this way, the Wi-Fi direct connection between the mobile phone 301 and the PC 302 may be completed, and an operation of transferring or projecting the file to the target device (such as the PC 302) may be completed. It should be noted that, in some other embodiments of this application, after a user selects the target device, for example, the PC 302, from the receiving device list, the user needs to enter a correct password, and/or after the target device confirms receiving, the Wi-Fi direct connection between the mobile phone 301 and the PC 302 may be completed.

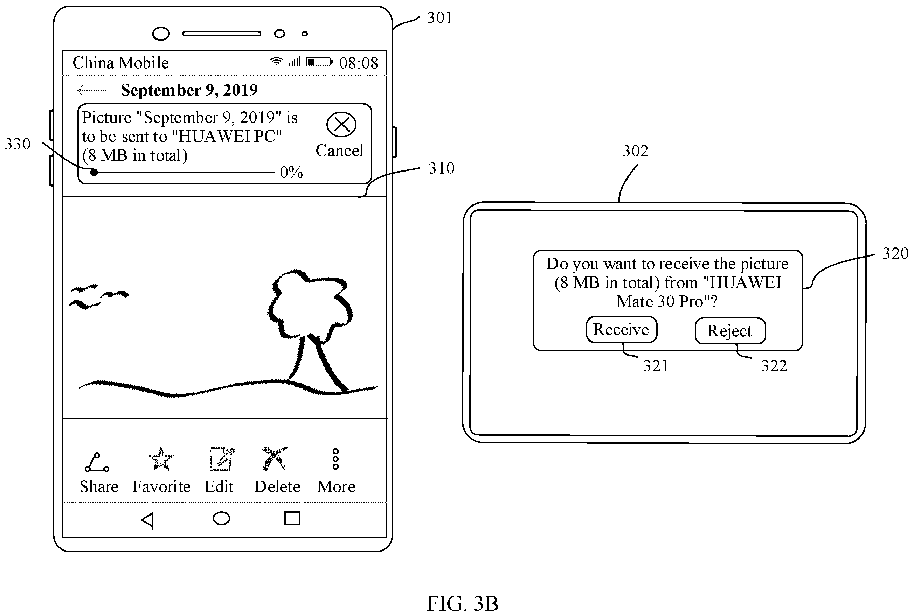

In a non-limiting example, FIG. 3B is a schematic diagram of a scenario in which the mobile phone 301 and the PC 302 establish a wireless connection and transfer a file. After receiving a picture sharing request sent by the mobile phone 301, the PC 302 may display a prompt box 320. The prompt box 320 includes a "receive" button 321 and a "reject" button 322. The "receive" button 321 may be configured to trigger the PC 302 to receive a picture 310 sent by the mobile phone 301. The "reject" button 322 may be configured to trigger the PC 302 to reject the picture 310 sent by the mobile phone 301. The PC 302 may receive an operation (for example, clicking) performed by the user on the "receive" button 321, and in response to the operation, the PC 302 may send a receiving response to the mobile phone 301. After receiving the receiving response, the mobile phone 301 may send the picture 310 to the PC 302 by using a communications technology such as Wi-Fi direct (Wi-Fi P2P), Wi-Fi wireless soft AP, or ultra-wideband (ultra-wideband, UWB). In a process of sending the picture 310, a progress displayed on a progress bar 320 on the mobile phone 301 changes during a transmission process. For example, when the mobile phone 301 does not start to transmit a picture 311, the progress displayed on the progress bar 320 is "0%", and when the transmission is completed, the progress displayed on the progress bar 320 is " 100%" .

In these embodiments, the mobile phone 301 establishes the Wi-Fi direct connection to the PC 302 in response to a monitored sharing event or projection event. It should be understood that the sharing event is an event of transferring a file to another device, and the projection event is an event of projecting a file to another device. The sharing event or the projection event is usually triggered by the user performing a preset operation. In the foregoing embodiment, only an example of an operation of triggering a sharing event or a projection event is described. In embodiments of this application, the operation of triggering the sharing event or the projection event may include one operation or a series of operations. The operation includes but is not limited to one of a screen touch operation, a cursor control operation, a voice control operation, a gesture control operation, and the like, or a combination of several thereof. The cursor control operation includes a cursor control operation performed by using one or more of a keyboard, a mouse, a remote control lever, a trackball, a joystick, a touch panel, and the like. In embodiments of this application, a manner of triggering the sharing event or the projection event is not limited.

In some other embodiments of this application, the user enables functions such as Wi-Fi direct functions or wireless projection functions in status bars or system settings of the mobile phone 301 and the PC 302. For example, Wi-Fi direct controls or wireless projection controls are tapped to be enabled. In this case, the mobile phone 301 and the PC 302 automatically enable Bluetooth functions and Wi-Fi functions, and the mobile phone 301 and the PC 302 may discover a nearby device by using Bluetooth. The mobile phone 301 may display a nearby receiving device list, and receive a user operation of tapping a target device (for example, the PC 302) in the receiving device list. In this way, a Wi-Fi direct connection between the mobile phone 301 and the PC 302 may be completed. In some other embodiments of this application, the PC 302 enables an NFC function and a Wi-Fi function, the mobile phone 301 enables an NFC function and a Wi-Fi function, and a user lightly taps the mobile phone 301 against the PC 302, for example, lightly taps an NFC area of the mobile phone 301 on an NFC area of the PC 302. The mobile phone 301 or the PC 302 automatically pops up a connection prompt interface. After the user selects confirmation in the connection prompt interface, a Wi-Fi direct connection between the mobile phone 301 and the PC 302 is completed. One-tap interconnection simplifies user operations and greatly improves interconnection efficiency. It should be noted that, in some other embodiments of this application, after the user selects confirmation in the connection prompt interface, the user needs to enter a correct password, so that the Wi-Fi direct connection between the mobile phone 301 and the PC 302 can be completed. In some other embodiments of this application, the mobile phone 301 and/or the PC 302 may not pop up a connection prompt interface, but may pop up a password input interface, and the user enters a correct password in the password input interface, so that the Wi-Fi direct connection between the mobile phone 301 and the PC 302 can be completed. Communication security is improved by setting a password. After the Wi-Fi direct connection is established between the mobile phone 301 and the PC 302, mutual file transfer between the two devices may be implemented, and projection from the mobile phone 301 to the PC 302 may also be implemented by using the Wi-Fi direct connection.

In these embodiments, the mobile phone 301 establishes the Wi-Fi direct connection to the PC 302 in response to a monitored Wi-Fi direct connection event. It should be understood that the Wi-Fi direct connection event is an event of establishing a Wi-Fi direct connection between the mobile phone and another device. The Wi-Fi direct connection event is usually triggered by the user performing a preset operation. In the foregoing embodiment, only an example of an operation of triggering a Wi-Fi direct connection event is described. In embodiments of this application, the operation of triggering the Wi-Fi direct connection event may include one operation or a series of operations. The operation includes but is not limited to one of a screen touch operation, a cursor control operation, a voice control operation, a gesture control operation, and the like, or a combination of several thereof. In embodiments of this application, a manner of triggering the Wi-Fi direct connection event is not limited.

Generally, a network interface of a Wi-Fi module in a mobile phone includes a wide area network (Wide Area Network, WAN) interface and a local area network (Local Area Network, LAN) interface. The WAN interface is configured to connect to a cellular mobile network or a WLAN. The LAN interface is configured to connect to an intranet or a device referred to as a local area network.

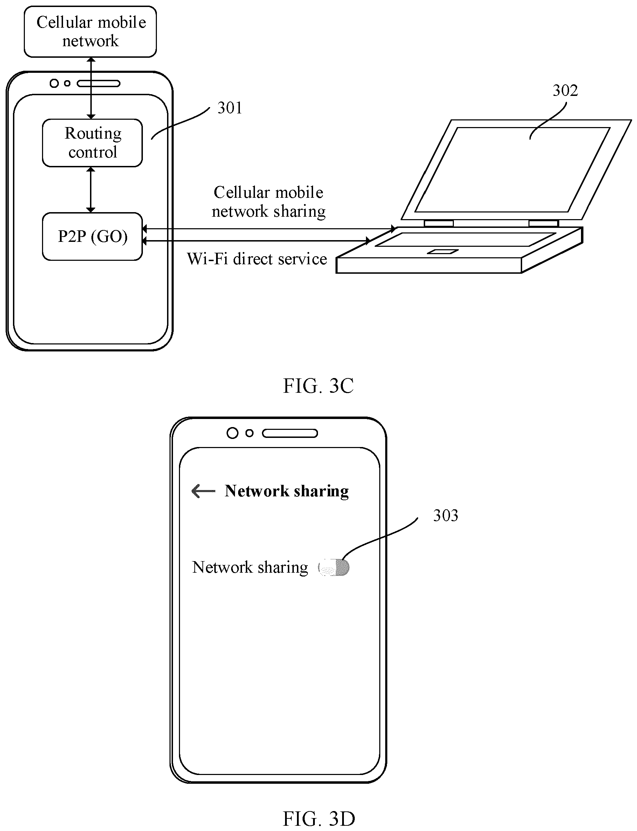

In the application scenario shown in FIG. 3A, as shown in FIG. 3C, a WAN interface of a Wi-Fi module in the mobile phone is connected to a cellular mobile network, and a LAN interface is a Wi-Fi P2P interface, that is, a P2P (GO) interface in FIG. 3C.

Still refer to FIG. 3C. A routing control module is configured for the mobile phone. The routing control module directs, based on a destination address of a data packet, the data packet received from the WAN interface, and forwards the data packet to the LAN interface, or directs, based on a destination address of a data packet, the data packet received from the LAN interface, and forwards the data packet to the WAN interface. In this way, the PC 302 can access a network by using the mobile phone.

In some embodiments of this application, although the Wi-Fi direct wireless connection channel is established between the mobile phone 301 and the PC 302, Wi-Fi direct service data transmission is not performed. In other words, although the Wi-Fi direct wireless connection channel is established between the mobile phone 301 and the PC 302, the user does not share or project data on the mobile phone 301 to the PC 302 through the Wi-Fi direct wireless connection channel. The PC 302 accesses the network by using the mobile phone 301, and may exchange data with the Internet.

In these embodiments, in one aspect, the routing control module of the mobile phone directs, based on a destination address of a data packet, the data packet received from the Internet through the WAN interface. If the destination address of the data packet is the PC 302, the data packet is forwarded to the P2P (GO) interface, and then the data packet is transferred to the PC 302 through the Wi-Fi direct channel; or if the destination address of the data packet is the mobile phone 301, the mobile phone 301 processes the data packet after receiving the data packet through the WAN interface. In another aspect, the routing control module of the mobile phone directs, based on a destination address of a data packet, the data packet that is received from the PC 302 through the P2P (GO) interface and whose destination address is the Internet, and forwards the data packet to the WAN interface.

In a non-limiting example, if an address of the PC 302 is 192.168.43.x, a gateway address of the mobile phone 301 at the P2P (GO) interface is 192.168.43.1, and an address of the mobile phone 301 is 192.168.1.100. For a data packet received from the Internet through the WAN interface, if a destination address of the data packet is 192.168.43.x, the data packet is forwarded to the P2P (GO) interface, and then the data packet is transferred to the PC 302 through the Wi-Fi direct channel; or if a destination address of the data packet is 192.168.1.100, the mobile phone 301 processes the data packet after receiving the data packet through the WAN interface.

In some other embodiments of this application, the mobile phone 301 and the PC 302 establish the Wi-Fi direct wireless connection channel, and perform Wi-Fi direct service data transmission, for example, file transmission by using Wi-Fi direct, or projection data transmission by using Wi-Fi projection (Wi-Fi Display) established by using Wi-Fi direct. A PC 42 accesses the network by using the mobile phone 301, and may exchange data with the Internet.

In these embodiments, in one aspect, the routing control module of the mobile phone directs, based on a destination address of a data packet, the data packet received from the Internet through the WAN interface. If the destination address of the data packet is the PC 302, the data packet is forwarded to the P2P (GO) interface, and then the data packet is transferred to the PC 302 through the Wi-Fi direct channel; or if the destination address of the data packet is the mobile phone 301, the mobile phone 301 processes the data packet after receiving the data packet through the WAN interface. In another aspect, the routing control module of the mobile phone directs, based on a destination address of a data packet, the data packet that is received from the PC 302 through the P2P (GO) interface and whose destination address is the Internet, and forwards the data packet to the WAN interface. In still another aspect, Wi-Fi direct service data is sent from the P2P (GO) interface to a PC 430, and the PC 302 receives and processes the Wi-Fi direct service data; and a processed Wi-Fi direct service data is sent from the PC 302 to the P2P (GO) interface, and the mobile phone 301 receives and processes the processed Wi-Fi direct service data.

It should be noted that different application processes use different ports, and a network transport layer transfers data to different applications based on different destination ports. A data packet from the Internet to the PC 302 and Wi-Fi direct service data from the mobile phone 301 to the PC 302 are processed by different applications based on different destination ports. Similarly, a data packet from the Internet to the mobile phone 301 and Wi-Fi direct service data from the PC 302 to the mobile phone 301 are processed by different applications based on different destination ports.

It should be further noted that when the Wi-Fi direct channel between the mobile phone 301 and the PC 302 needs to transmit network connection data and Wi-Fi direct service data, a multiplexing technology such as time division multiplexing, frequency division multiplexing, or code division multiplexing may be used. Selection of the multiplexing technology is not specifically limited in this application.

The routing control module is implemented by using software. Therefore, only software of an existing hardware device needs to be upgraded, and the hardware device does not need to be replaced. This reduces network access costs.

In some embodiments of this application, the user may enable or disable the network sharing function of the mobile phone, to implement setting of mobile phone network sharing. For example, FIG. 3D shows a user settings screen of the mobile phone. In the screen, the user may enable or disable network sharing by triggering (for example, tapping) a selection control 303. It should be understood that the screen and the control herein are examples for description, and cannot be construed as a specific limitation on this application.

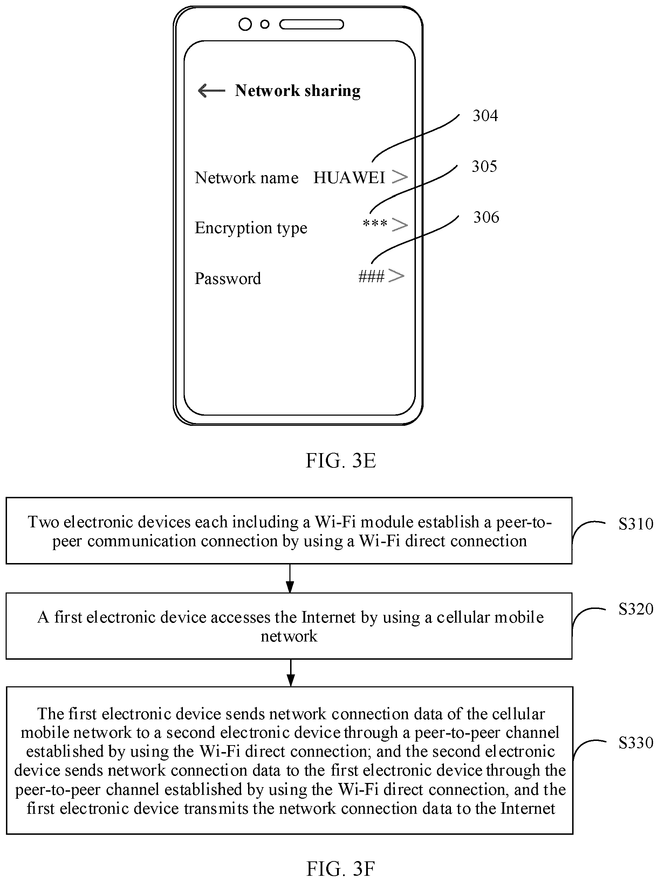

In some embodiments of this application, the user may set a network name, an encryption type, a password, and the like of the P2P (GO) interface. For example, FIG. 3E shows a user settings screen of the mobile phone. In the screen, the user may trigger a first control 304 to modify a network name, trigger a second control 305 to select an encryption type, and trigger a third control 306 to modify an encryption password. It should be understood that the screen and the controls herein are examples for description, and cannot be construed as a specific limitation on this application. If the user sets an encryption password for network sharing, based on the example shown in FIG. 3D, after triggering the selection control 303, the user enters a correct password in a password input interface, so that the network sharing can be enabled.

In some other embodiments of this application, if the Wi-Fi direct connection is established between the mobile phone 301 and the PC 302, the mobile phone 301 may actively push a notification message to the PC 302. The notification message includes whether the PC 302 agrees to access the network by using the mobile phone 301, or the like. After receiving an acknowledgment from the PC 302, the mobile phone 301 enables the network sharing function. In some other embodiments of this application, if the mobile phone 301 and the PC 302 have a same user account, and a Wi-Fi direct connection is established between the mobile phone 301 and the PC 302, the mobile phone 301 may actively pop up an inquiry notification. The inquiry notification includes whether the user agrees to or accepts enabling of the network sharing function by the mobile phone 301. After the user confirms on the mobile phone 301, the mobile phone 301 enables the network sharing function.

It should be understood that, in this embodiment of this application, the mobile phone 301 enables the mobile phone network sharing function in response to a monitored network sharing enabling event. The network sharing enabling event refers to an event that allows the mobile phone to share a network access capability with another device, such as the PC 302, and is usually triggered by the user performing a preset operation. In the foregoing embodiment, only an example of an operation of triggering a network sharing enabling event is described. In embodiments of this application, the operation of triggering the network sharing enabling event may include one operation or a series of operations. The operation includes but is not limited to one of a screen touch operation, a cursor control operation, a voice control operation, a gesture control operation, and the like, or a combination of several thereof. In embodiments of this application, a manner of triggering the network sharing enabling event is not limited.

In the application scenario of FIG. 3A, FIG. 3B, and FIG. 3C, as shown in FIG. 3F, the method for providing wireless network access includes the following steps:
S310: Two electronic devices each including a Wi-Fi module: a first electronic device and a second electronic device establish a peer-to-peer communication connection by using a Wi-Fi direct connection.
S320: The first electronic device accesses the Internet by using a cellular mobile network.
   In the examples shown in FIG. 3A, FIG. 3B, and FIG. 3C, the two electronic devices each including a Wi-Fi module include a mobile phone and a PC. In another example, the two electronic devices may alternatively be other electronic devices. For example, one electronic device is a PAD that can access a cellular mobile network, and the other electronic device is a PC, a television, a smart display, or the like.
S330: The first electronic device sends network connection data of the cellular mobile network to the second electronic device through a peer-to-peer channel established by using the Wi-Fi direct connection; and the second electronic device sends network connection data to the first electronic device through the peer-to-peer channel established by using the Wi-Fi direct connection, and the first electronic device transmits the network connection data to the Internet.

It should be noted that numbers of steps S310 and S320 cannot be construed as a limitation on a time sequence of the two steps. In this embodiment of this application, a time sequence of the two steps is not limited. Step S310 may be performed before step S320, or step S310 may be performed after step S320, or step S310 and step S320 may be simultaneously performed.

Because the Wi-Fi direct technology allows a plurality of Wi-Fi terminals to simultaneously establish wireless connections, in another embodiment, a plurality of second electronic devices may be provided, and the plurality of second electronic devices may access a network by using a mobile phone.

In the first application scenario, the first electronic device accesses the cellular mobile network, and the first electronic device shares the accessed cellular mobile network with the second electronic device by using the established Wi-Fi peer-to-peer communication connection to the second electronic device, so that the second electronic device can have a network access capability.

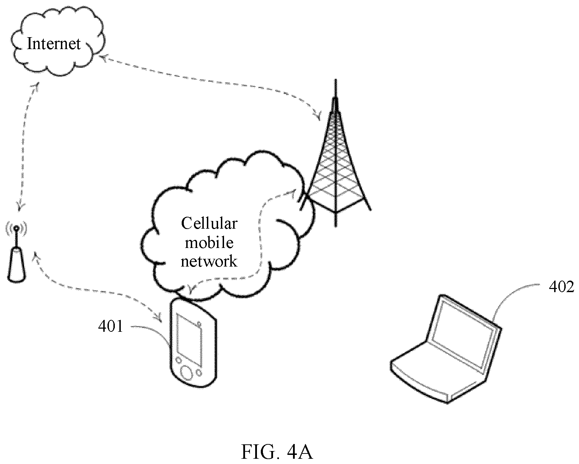

FIG. 4A to FIG. 4D are schematic diagrams of a second application scenario of a method for providing wireless network access according to an embodiment of this application.

As shown in FIG. 4A, in the second application scenario, a mobile phone 401 may access a cellular mobile network and a WLAN to implement network access.

When the mobile phone accesses one of the cellular mobile network and the WLAN, and a peer device needs to obtain a network access capability of the mobile phone, that is, obtain a shared network of the mobile phone, in this embodiment of this application, in response to a monitored network sharing enabling event, the mobile phone 401 may establish a Wi-Fi direct peer-to-peer communication connection to a peer device 402, that is, establish a Wi-Fi P2P wireless connection channel. The peer device 402 is a PC. It should be understood that, for a manner of triggering the mobile phone 401 to enable a network sharing function, refer to the manner in the first application scenario. A manner of triggering the network sharing enabling event is not specifically limited in this embodiment of this application. It should be further understood that, in the embodiment shown in FIG. 4A, after the mobile phone 401 enables the network sharing function, the mobile phone 401 can establish a Wi-Fi direct peer-to-peer communication connection to the PC without a user triggering a Wi-Fi direct connection event on the mobile phone 401, to share a network access capability of the mobile phone 401 with the PC 402. For example, the user may not need to trigger, on the mobile phone 401, a control for enabling Wi-Fi direct. The mobile phone 401 may automatically enable a Wi-Fi direct function, and a status of the control for enabling Wi-Fi direct is an enabled state. One-tap network sharing greatly simplifies user operations, improves operation efficiency, and improves user experience.

The mobile phone 401 and the PC 402 establish the Wi-Fi P2P wireless connection channel, a role of the mobile phone 401 is a GO, and a role of the PC 402 is a GC.

Optionally, the mobile phone 401 and the PC 402 may perform Wi-Fi direct service data transmission through the Wi-Fi P2P wireless connection channel, for example, file transmission by using Wi-Fi direct, or projection data transmission by using Wi-Fi projection (Wi-Fi Display) that is established by using Wi-Fi direct.

When the mobile phone accesses the other network in the cellular mobile network and the WLAN, and the peer device needs to obtain a network access capability of the mobile phone, that is, obtain a shared network of the mobile phone, in this embodiment of this application, in response to a monitored network sharing enabling event, the mobile phone 401 may enable wireless Soft AP (Soft AP) to establish a wireless connection channel to the PC 402, and the PC 402 obtains a network access capability by using a hotspot function of the mobile phone 401. It should be understood that, for a manner of triggering the mobile phone 401 to enable a network sharing function, refer to the manner in the first application scenario. A manner of triggering the network sharing enabling event is not specifically limited in this embodiment of this application. It should be further understood that, in the embodiment shown in FIG. 4A, after the mobile phone 401 enables the network sharing function, the mobile phone 401 can establish a wireless hotspot connection to the PC 402 without a user triggering a hotspot enabling event on the mobile phone 401, to share a network access capability of the mobile phone 401 with the PC 402. For example, the user may not need to trigger, on the mobile phone 401, a control for enabling a hotspot. The mobile phone 401 may automatically enable a hotspot function, and a status of the control for enabling a hotspot is an enabled state. The hotspot enabling event refers to an event of enabling a hotspot function, that is, enabling Soft AP and establishing a wireless hotspot connection channel.

The Soft AP provides same functions such as a signal transfer function and a routing function as a Wi-Fi AP by using a driver.

It should be noted that, because the Wi-Fi direct technology and the Soft AP technology allow a plurality of Wi-Fi terminals to simultaneously establish wireless connections, in another embodiment, a plurality of peer devices may be provided, and the plurality of peer devices may access a network by using a mobile phone.

It should be further noted that, in an implementation, as shown in FIG. 4A, the mobile phone 401 accesses the WLAN in a wireless AP manner. In another implementation, a device having a network access capability may not be a mobile phone but another electronic device, for example, a notebook computer or a desktop computer. The notebook computer and the desktop computer may access a WLAN in a wired manner, and the notebook computer and the desktop computer may extend and share the WLAN of the notebook computer and the desktop computer with the mobile phone.

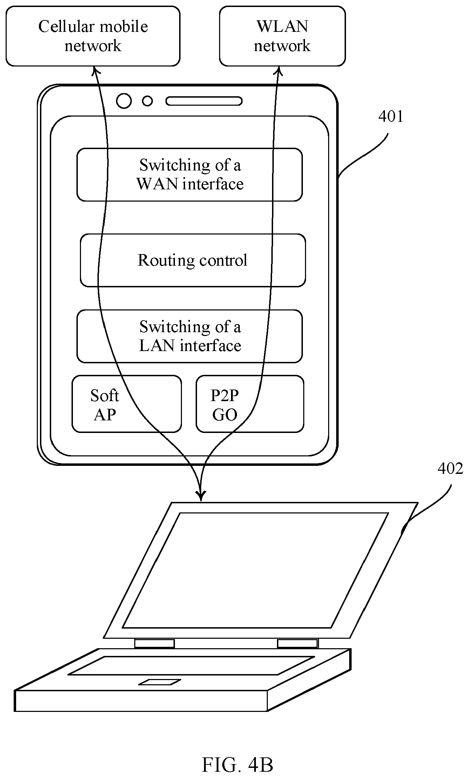

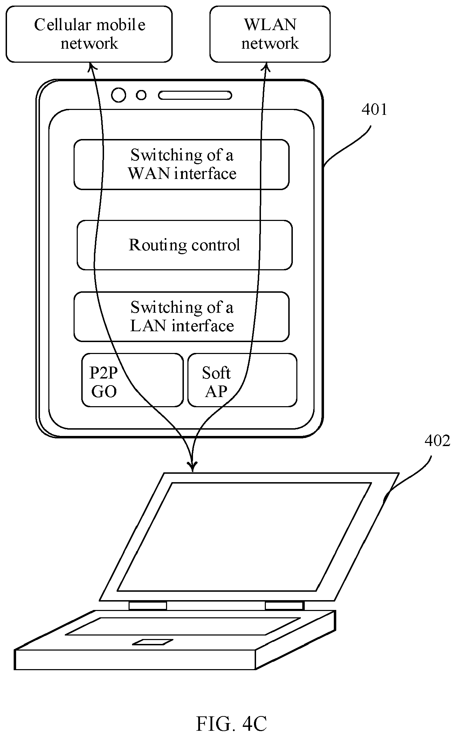

In the application scenario shown in FIG. 4A, as shown in FIG. 4B and FIG. 4C, a WAN interface of a Wi-Fi module in the mobile phone includes a WAN interface that is separately connected to a cellular mobile network and a WLAN. When the WLAN cannot access the Internet, the mobile phone may switch to the cellular mobile network. LAN interfaces include a Wi-Fi P2P interface and a Soft AP interface. The Wi-Fi P2P interface is a P2P (GO) interface in FIG. 4B and FIG. 4C.

Still refer to FIG. 4B and FIG. 4C. A routing control module is configured for the mobile phone. The routing control module directs, based on a destination address of a data packet, the data packet received from the WAN interface, and forwards the data packet to the LAN interface, or directs, based on a destination address of a data packet, the data packet received from the LAN interface, and forwards the data packet to the WAN interface. In this way, network data is forwarded.

In the embodiments shown in FIG. 4B and FIG. 4C, the mobile phone may access the cellular mobile network and the WLAN, forward network data to the LAN interface by using the routing control module, and then forward the network data to another Wi-Fi terminal device through the LAN interface; or forward, to the WAN interface by using the routing control module from the LAN interface, network data received by the LAN interface from another Wi-Fi terminal device, and then upload the network data to the Internet through the WAN interface, so as to share the network of the mobile phone with the another Wi-Fi terminal device. In a case in which no Wi-Fi AP or wired network is deployed, the PC 402 can still normally access a network. This reduces network construction costs.

In the embodiment shown in FIG. 4B, a correspondence between the LAN interface and the WAN interface during network sharing includes: the WAN interface used when accessing the cellular mobile network corresponds to the Soft AP interface in the LAN interfaces; and the WAN interface used when accessing the WLAN corresponds to the P2P (GO) interface in the LAN interfaces. To be specific, when the mobile phone 401 enables network sharing, the mobile phone 401 does not depend on the cellular mobile network of the mobile phone 401 or the WLAN: when the WAN interface of the mobile phone 401 is activated in the cellular mobile network, the LAN interface enables Soft AP, and a status of the mobile phone 401 indicates that cellular network sharing is enabled; or when the WAN interface of the mobile phone 401 is activated in the WLAN, the LAN interface enables P2P (GO), and a status of the mobile phone 401 indicates that WLAN sharing is enabled.

Based on the embodiment shown in FIG. 4B, if switching occurs on the WAN interface of the mobile phone, the mobile phone actively disconnects the LAN interface and re-creates a corresponding LAN interface, and the disconnected peer device may manually or automatically reconnect to the mobile phone after the connection is interrupted. For example, if the mobile phone 401 switches from accessing the cellular mobile network to accessing the WLAN, the mobile phone actively disconnects a LAN interface corresponding to the cellular mobile network, that is, the Soft AP interface, and re-enables a LAN interface corresponding to the WLAN, that is, the P2P (GO) interface. After the connection to the mobile phone 401 is interrupted, the PC 402 may automatically search for a shared network and reconnect to the mobile phone 401, or a user triggers a shared network search event, and the PC reconnects to the mobile phone in response to the shared network search event.

In the embodiment shown in FIG. 4C, a correspondence between the LAN interface and the WAN interface during network sharing includes: the WAN interface used when accessing the cellular mobile network corresponds to the P2P (GO) interface in the LAN interfaces; and the WAN interface used when accessing the WLAN corresponds to the Soft AP interface in the LAN interfaces. To be specific, when the mobile phone 401 enables network sharing, the mobile phone 401 does not depend on the cellular mobile network of the mobile phone 401 or the WLAN: when the WAN interface of the mobile phone 401 is activated in the cellular mobile network, the LAN interface enables P2P (GO), and a status of the mobile phone 401 indicates that cellular mobile network sharing is enabled; or when the WAN interface of the mobile phone 401 is activated in the WLAN, the LAN interface enables Soft AP, and a status of the mobile phone 401 indicates that WLAN sharing is enabled.

Based on the embodiment shown in FIG. 4C, if switching occurs on the WAN interface of the mobile phone, the mobile phone actively disconnects the LAN interface and re-creates a corresponding LAN interface, and the disconnected peer device may manually or automatically reconnect to the mobile phone after the connection is interrupted. For example, if the mobile phone 401 switches from accessing the WLAN to accessing the cellular mobile network, the mobile phone actively disconnects a LAN interface corresponding to the WLAN, that is, the Soft AP interface, and re-enables a LAN interface corresponding to the cellular mobile network, that is, the P2P (GO) interface. After the connection to the mobile phone 401 is interrupted, if the PC 402 is connected to the mobile phone 401 not for the first time, the PC 402 may automatically search for a shared network of the mobile phone 401 and reconnect to the mobile phone 401; or if the PC 402 is connected to the mobile phone 401 for the first time, a user triggers a shared network search event on the PC 402, and the PC 402 responds to the shared network search event, obtains a password entered by the user, and reconnects to the mobile phone if verification succeeds.

In examples shown in FIG. 4A to FIG. 4C, a network sharing device is a mobile phone, and the peer device 402 is a PC. In another example, the network sharing device may alternatively be an electronic device such as a PAD or a wearable device that can access a cellular mobile network and a WLAN. The peer device may alternatively be an electronic device such as a PAD, a television, or a smart display.

Based on the embodiments shown in FIG. 4B and FIG. 4C, in some embodiments of this application, on the mobile phone 401, the user may choose to enable or disable network sharing. The user may set a network name, an encryption type, and a password of the shared network. The mobile phone 401 may prompt that a current sharing status is in the cellular mobile network or the WLAN.

In some embodiments of this application, when the Soft AP interface and the P2P (GO) interface of the mobile phone 401 are enabled to establish the wireless connection channel to the PC 402, a unified network name and password may be configured for the mobile phone. The network name is, for example, a service set identifier (Service Set Identifier, SSID).

In some embodiments of this application, in one aspect, when the mobile phone 401 and the PC 402 establish a Wi-Fi P2P wireless connection channel to implement network sharing of the mobile phone, the PC 402 accesses a network by using the mobile phone 401 and may exchange data with the Internet. In another aspect, Wi-Fi direct service data may be further transmitted between the mobile phone 401 and the PC 402. In this case, a working procedure of the routing control module is similar to that in the first application scenario. For details, refer to related descriptions in the first application scenario.

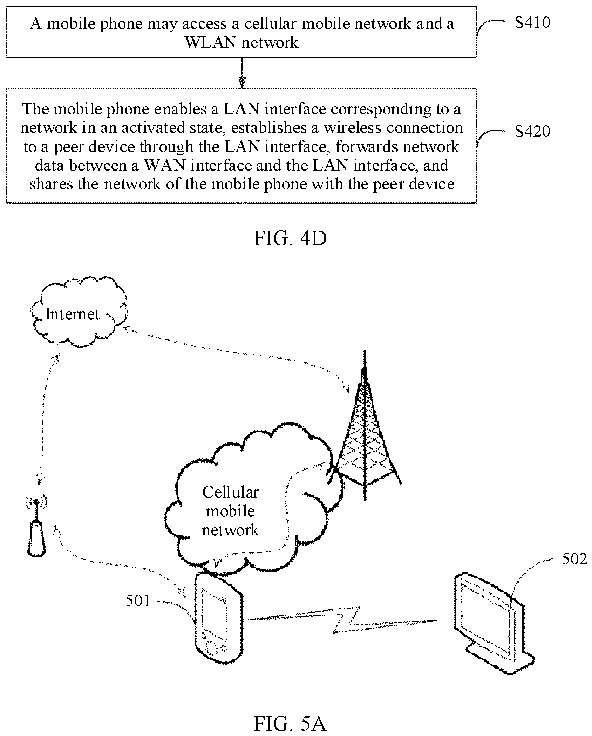

In the application scenario of FIG. 4A to FIG. 4C, as shown in FIG. 4D, the method for providing wireless network access includes the following steps:
S410: A mobile phone may access a cellular mobile network and a WLAN, and both networks may be in an activated state, or one of the networks is in an activated state.
S420: The mobile phone enables a LAN interface corresponding to a network in an activated state, and establishes a wireless connection to a peer device through the LAN interface. The mobile phone forwards network data between a WAN interface and the LAN interface, and shares the network of the mobile phone with the peer device.

Whether the WAN interface of the mobile phone activates the cellular mobile network or the WLAN is related to a network priority setting of the mobile phone. Usually, the WLAN is activated first. LAN interfaces of the mobile phone include a Soft AP interface and a P2P (GO) interface.

Based on the embodiment shown in FIG. 4B, if the WAN interface of the mobile phone 401 accesses the cellular mobile network, the mobile phone 401 enables a LAN interface corresponding to the cellular mobile network, that is, the Soft AP interface. The mobile phone 401 establishes a wireless connection to the PC 402 through the Soft AP interface. If the WAN interface of the mobile phone 401 accesses the WLAN, the mobile phone 401 enables a LAN interface corresponding to the WLAN, that is, the P2P (GO) interface. The mobile phone 401 establishes a Wi-Fi P2P connection to the PC 402 through the P2P (GO) interface.

Based on the embodiment shown in FIG. 4C, if the WAN interface of the mobile phone 401 accesses the WLAN, the mobile phone 401 enables a LAN interface corresponding to the WLAN, that is, the Soft AP interface. The mobile phone 401 establishes a wireless connection to the PC 402 through the Soft AP interface. If the WAN interface of the mobile phone 401 accesses the cellular mobile network, the mobile phone 401 enables a LAN interface corresponding to the cellular mobile network, that is, the P2P (GO) interface. The mobile phone 401 establishes a Wi-Fi P2P connection to the PC 402 through the P2P (GO) interface.

In the embodiments of FIG. 4B and FIG. 4C, the routing control module configured for the mobile phone directs, based on the destination address of the data packet, the data packet received from the Internet through the WAN interface, forwards the data packet to the LAN interface, and then sends the data packet to the PC through the LAN interface. Alternatively, the routing control module configured for the mobile phone directs, based on the destination address of the data packet, the data packet received from the PC through the LAN interface, and forwards the data packet to the WAN interface, and then uploads the data packet to the Internet through the WAN interface. Therefore, the PC can access the Internet by using the mobile phone.

Therefore, in the second application scenario, when the mobile phone is connected to a WLAN, for example, a Wi-Fi network, the mobile phone establishes a peer-to-peer communication connection to the peer device, and may extend and share the accessed Wi-Fi network with the peer device. When the Wi-Fi network cannot access the Internet, the mobile phone switches to the cellular mobile network, and the mobile phone establishes a peer-to-peer communication connection to the peer device, and may extend and share the accessed cellular mobile network with the peer device. In this way, when the mobile phone switches the network, the peer device can continuously obtain the network access capability.

FIG. 5A to FIG. 5C are schematic diagrams of a third application scenario of a method for providing wireless network access according to an embodiment of this application.

As shown in FIG. 5A, in the third application scenario, a mobile phone 501 may access a cellular mobile network and a WLAN to implement network access. The mobile phone 501 establishes a Wi-Fi direct peer-to-peer communication connection to a peer device 502, that is, establishes a Wi-Fi P2P wireless connection channel. The peer device 502 is a television (TV). It should be understood that the TV 502 includes a Wi-Fi module.

The mobile phone 401 and the TV 502 establish the Wi-Fi P2P wireless connection channel, a role of the mobile phone 401 is a GO, and a role of the TV 502 is a GC.

In some embodiments of this application, the mobile phone 501 and the TV 502 may perform Wi-Fi direct service data transmission through the Wi-Fi P2P wireless connection channel, for example, file transmission by using Wi-Fi direct, or projection data transmission by using Wi-Fi projection (Wi-Fi Display) that is established by using Wi-Fi direct.

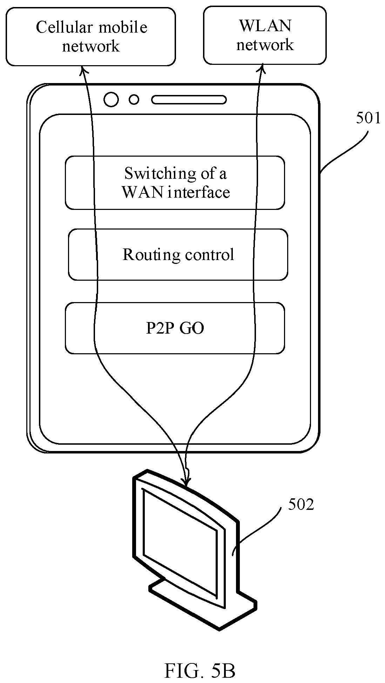

As shown in FIG. 5B, a WAN interface of a Wi-Fi module in the mobile phone includes a WAN interface that is separately connected to a cellular mobile network and a WLAN. In some cases, if the WLAN cannot access the Internet, the mobile phone may switch to the cellular mobile network. In other cases, if the cellular mobile network cannot access the Internet, the mobile phone may switch to the WLAN. The LAN interface includes a Wi-Fi P2P interface, that is, a P2P (GO) interface in FIG. 5B.

Still refer to FIG. 5B. A routing control module is configured for the mobile phone. The routing control module directs, based on a destination address of a data packet, the data packet received from the WAN interface, and forwards the data packet to the LAN interface, or directs, based on a destination address of a data packet, the data packet received from the LAN interface, and forwards the data packet to the WAN interface. In this way, network data is forwarded.

In the embodiment shown in FIG. 5B, the mobile phone may access the cellular mobile network and the WLAN, forward network data to the LAN interface by using the routing control module, and then forward the network data to another Wi-Fi terminal device through the LAN interface; or forward, to the WAN interface by using the routing control module from the LAN interface, network data received by the LAN interface from another Wi-Fi terminal device, and then upload the network data to the Internet through the WAN interface, so as to share the network of the mobile phone with the another Wi-Fi terminal device. In a case in which no Wi-Fi AP or wired network is deployed, the TV 502 can still normally access a network. This reduces network construction costs.

In the embodiment shown in FIG. 5B, whether the WAN interface of the mobile phone is currently activated in the cellular mobile network or the WLAN, the LAN interface fixedly enables the P2P (GO) interface. In other words, switching of the WAN interface does not affect the LAN interface.

It should be noted that, in some cases, if the WAN interface is switched from the cellular mobile network to the WLAN, switching may occur on a channel on the LAN interface because the channel needs to follow a WLAN channel. For example, when the WAN interface is activated in the cellular mobile network, the LAN interface uses a channel 6. When the WAN interface is switched from the cellular mobile network to the WLAN, the WAN interface uses a channel 1. In this case, for a purpose of avoiding signal interference, the channel on the LAN interface may be switched to the channel 1. For another example, when the WAN interface is activated in the cellular mobile network, the LAN interface uses a channel 6. When the WAN interface is switched from the cellular mobile network to the WLAN, the WLAN uses the channel 6. In this case, for a purpose of avoiding signal interference, the channel on the LAN interface may be switched to a channel 1.

It should be further noted that, because the Wi-Fi direct technology allows a plurality of Wi-Fi terminals to simultaneously establish wireless connections, in another embodiment, a plurality of peer devices may be provided, and the plurality of peer devices may access a network by using a mobile phone.

Based on the embodiment shown in FIG. 5B, in some embodiments of this application, on the mobile phone 501, a user may choose to enable or disable network sharing. The user may set a network name, an encryption type, and a password of the shared network. The network name is, for example, a service set identifier (Service Set Identifier, SSID). The mobile phone 501 may prompt that a current sharing status is in the cellular mobile network or the WLAN. For example, if the TV 502 is connected to the mobile phone 501 for the first time, and a shared network encryption is not set for the mobile phone 501, the TV 502 may automatically search for a shared network of the mobile phone 401 and establish a Wi-Fi P2P wireless connection channel to the mobile phone. If the TV 502 is connected to the mobile phone 501 for the first time, and a shared network encryption is set for the mobile phone 501, the user triggers a shared network search event on the TV 502, and the TV 502 responds to the shared network search event, obtains a password entered by the user, and establishes a Wi-Fi P2P wireless connection channel to the mobile phone if verification succeeds.

In some embodiments of this application, if switching occurs on the WAN interface of the mobile phone, a status prompt may be provided to indicate whether a current shared network is the cellular mobile network or the WLAN. For example, when the WAN interface of the mobile phone is currently activated in the cellular mobile network, a status of the mobile phone indicates that cellular mobile network sharing is enabled; or when the WAN interface of the mobile phone is currently activated in the WLAN, a status of the mobile phone indicates that WLAN sharing is enabled.

In some embodiments of this application, when the mobile phone 501 and the TV 502 establish a Wi-Fi P2P wireless connection channel to implement network sharing of the mobile phone, in one aspect, the TV 502 accesses a network by using the mobile phone 501, and may exchange data with the Internet. In another aspect, Wi-Fi direct service data may be further transmitted between the mobile phone 501 and the TV 502. In this case, a working procedure of the routing control module is similar to that in the first application scenario. For details, refer to related descriptions in the first application scenario.

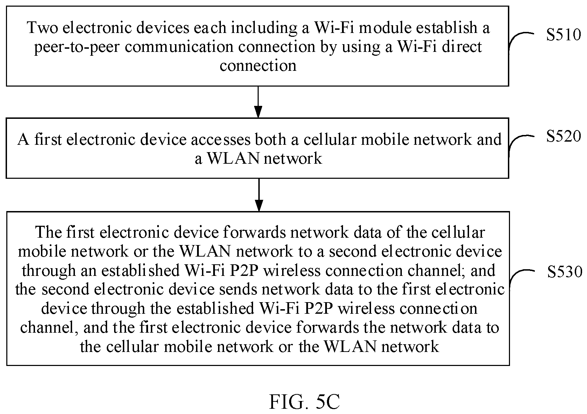

In the application scenario of FIG. 5A and FIG. 5B, as shown in FIG. 5C, the method for providing wireless network access includes the following steps:
S510: Two electronic devices each including a Wi-Fi module: a first electronic device and a second electronic device establish a peer-to-peer communication connection by using a Wi-Fi direct connection.

In examples shown in FIG. 5A and FIG. 5B, two electronic devices each including a Wi-Fi module include a mobile phone and a TV, and the mobile phone and the TV establish a Wi-Fi P2P wireless connection channel.

In another example, the two electronic devices may alternatively be other electronic devices. For example, the first electronic device is a PAD that can access a cellular mobile network and a WLAN, and the second electronic device is a PC, a TV, a smart display, or the like.

S520: The first electronic device may access both a cellular mobile network and a WLAN, and both networks may be in an activated state, or one of the networks is in an activated state.

S530: The first electronic device forwards network data of the cellular mobile network or the WLAN to the second electronic device through the established Wi-Fi P2P wireless connection channel; and the second electronic device sends network data to the first electronic device through the established Wi-Fi P2P wireless connection channel, and the first electronic device forwards the network data to the cellular mobile network or the WLAN.

The first electronic device shares the connected cellular mobile network and WLAN with another Wi-Fi terminal device through network forwarding. A LAN interface in a sharing manner of the first electronic device is fixedly a P2P (GO) interface. Whether the first electronic device is currently in the cellular mobile network or the WLAN, the LAN interface fixedly enables the P2P (GO) interface. The routing control module directs and forwards network data between a WAN interface and the LAN interface.

It should be noted that numbers of steps S510 and S520 cannot be construed as a limitation on a time sequence of the two steps. In this embodiment of this application, a time sequence of the two steps is not limited. Step S510 may be performed before step S520, or step S510 may be performed after step S520, or step S510 and step S520 may be simultaneously performed.

In the third application scenario, the first electronic device and the second electronic device have established the Wi-Fi peer-to-peer communication connection. When the first electronic device accesses the WLAN, the WLAN may be extended and shared with the second electronic device by using the existing Wi-Fi peer-to-peer connection. When the first electronic device cannot access the WLAN and switches to the cellular mobile network, the second electronic device can continuously obtain a network access capability.

It should be understood that sequence numbers of the steps in the foregoing embodiments do not mean execution sequences. The execution sequences of the processes should be determined based on functions and internal logic of the processes, and should not be construed as any limitation on the implementation processes of embodiments of this application.

Persons skilled in the art may clearly understand that, for the purpose of convenient and brief description, division into the foregoing function units or modules is merely used as an example for description. In actual application, the foregoing functions may be allocated to different function units or modules for implementation according to a requirement. That is, an inner structure of the apparatus is divided into different function units or modules to implement all or some of the functions described above. Function units or modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units or modules are merely provided for distinguishing between the units or modules, but are not intended to limit the protection scope of this application. For a specific working process of the units or modules in the foregoing system, refer to a corresponding process in the foregoing method embodiments. Details are not described herein again.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the mobile terminal is enabled to implement the steps in the foregoing method embodiments when executing the computer program product.

When the integrated module/unit is implemented in the form of the software function unit and sold or used as an independent product, the integrated module/unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code. The computer program code may be in a source code form, an object code form, an executable file form, some intermediate forms, or the like. The computer-readable medium may include at least any entity or apparatus capable of carrying the computer program code to an apparatus/terminal device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, according to legislation and patent practice, a computer-readable medium cannot be an electrical carrier signal or a telecommunications signal.

In the foregoing embodiments, the descriptions in each embodiment have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed electronic device and method may be implemented in other manners. For example, the electronic device embodiment described above is merely an example. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A system for providing wireless network access, wherein the system comprises a first electronic device and a second electronic device;
the first electronic device is configured to:
receive a first operation of a user, wherein the first operation is used to share or project first data in the first electronic device to the second electronic device;
establish a Wi-Fi direct connection to the second electronic device in response to the first operation; and
receive a second operation of the user, wherein the second operation is used to enable a network sharing function of the first electronic device; and
the second electronic device is configured to:
receive the first data from the first electronic device; and
perform data receiving and sending with a network side by using the network sharing function of the first electronic device.

2. The system according to claim 1, wherein the first operation comprises an operation of selecting the first data, an operation of enabling a sharing control, and an operation of selecting the second electronic device as a receiving device.

3. The system according to claim 1, wherein the second operation comprises an operation of enabling a network sharing control.

4. The system according to claim 3, wherein the second operation further comprises an operation of entering a correct password.

5. The system according to any one of claims 1 to 4, wherein the first electronic device comprises a Wi-Fi module and a routing control module, the Wi-Fi module comprises a wide area network WAN interface and a local area network LAN interface, the local area network LAN interface is a Wi-Fi peer-to-peer P2P interface, and the first electronic device establishes the Wi-Fi direct connection to the second electronic device through the Wi-Fi P2P interface;
the first electronic device accesses a cellular mobile network or a wireless local area network WLAN through the WAN interface;
the second operation is used to enable a routing control function of the routing control module; and
the routing control function comprises: if a destination address of second data on the network side that is received from the WAN interface is the second electronic device, forwarding the second data to the Wi-Fi P2P interface, and sending the second data to the second electronic device through the Wi-Fi P2P interface; and if a destination address of third data that is received from the second electronic device through the Wi-Fi P2P interface is the network side, forwarding the third data to the WAN interface, and sending the third data to the network side through the WAN interface.

6. The system according to claim 5, wherein the first electronic device is further configured to prompt the user of a network sharing status, wherein the network sharing status comprises that cellular mobile network sharing is enabled or WLAN sharing is enabled.

7. A system for providing wireless network access, wherein the system comprises a first electronic device and a second electronic device;
the first electronic device is configured to:
receive a third operation of a user, wherein the third operation is used to establish a wireless connection between the first electronic device and the second electronic device, and enable a network sharing function of the first electronic device; and
the second electronic device is configured to:
perform data receiving and sending with a network side by using the network sharing function of the first electronic device.

8. The system according to claim 7, wherein the third operation comprises an operation of enabling a network sharing control, or an operation of tapping an NFC area of the first electronic device on an NFC area of the second electronic device.

9. The system according to claim 8, wherein the third operation further comprises an operation of entering a correct password.

10. The system according to any one of claims 7 to 9, wherein the first electronic device comprises a Wi-Fi module and a routing control module, the Wi-Fi module comprises a wide area network WAN interface and a local area network LAN interface, the local area network LAN interface is a Wi-Fi peer-to-peer P2P interface, and the first electronic device establishes a Wi-Fi direct connection to the second electronic device through the Wi-Fi P2P interface;
the first electronic device accesses a cellular mobile network or a wireless local area network WLAN through the WAN interface;
the third operation is used to enable the Wi-Fi P2P interface, establish the Wi-Fi direct connection to the second electronic device through the Wi-Fi P2P interface, and enable a routing control function of the routing control module; and
the routing control function comprises: if a destination address of second data on the network side that is received from the WAN interface is the second electronic device, forwarding the second data to the Wi-Fi P2P interface, and sending the second data to the second electronic device through the Wi-Fi P2P interface; and if a destination address of third data that is received from the second electronic device through the Wi-Fi P2P interface is the network side, forwarding the third data to the WAN interface, and sending the third data to the network side through the WAN interface.

11. The system according to any one of claims 7 to 9, wherein the first electronic device comprises a Wi-Fi module and a routing control module, the Wi-Fi module comprises a wide area network WAN interface and local area network LAN interfaces, the local area network LAN interfaces comprise a Wi-Fi peer-to-peer P2P interface and a soft access point AP interface;
the first electronic device accesses a cellular mobile network or a wireless local area network WLAN though the WAN interface, and the third operation is used to enable the Wi-Fi P2P interface or the soft AP interface, establish a Wi-Fi direct connection to the second electronic device through the Wi-Fi P2P interface or establish a wireless hotspot connection to the second electronic device through the soft AP interface, and enable a routing control function of the routing control module;
the routing control function comprises: if a destination address of second data on a cellular mobile network side that is received from the WAN interface is the second electronic device, forwarding the second data to the Wi-Fi P2P interface or the soft AP interface, and sending the second data to the second electronic device through the Wi-Fi P2P interface or the soft AP interface; and if a destination address of third data that is received from the second electronic device through the Wi-Fi P2P interface or the soft AP interface is the network side, forwarding the third data to the WAN interface, and sending the third data to the network side through the WAN interface; and
if the first electronic device accesses the cellular mobile network through the WAN interface, the first electronic device enables the soft AP interface in response to a monitored network sharing enabling event, and establishes the wireless hotspot connection to the second electronic device through the soft AP interface; and if the first electronic device accesses the WLAN through the WAN interface, the first electronic device enables the Wi-Fi P2P interface in response to a monitored network sharing enabling event, and establishes the Wi-Fi direct connection to the second electronic device through the Wi-Fi P2P interface; or
if the first electronic device accesses the cellular mobile network through the WAN interface, the first electronic device enables the Wi-Fi P2P interface in response to a monitored network sharing enabling event, and establishes the Wi-Fi direct connection to the second electronic device through the Wi-Fi P2P interface; and if the first electronic device accesses the WLAN through the WAN interface, the first electronic device enables the soft AP interface in response to a monitored network sharing enabling event, and establishes the wireless hotspot connection to the second electronic device through the soft AP interface.

12. The system according to any one of claims 7 to 9, wherein the first electronic device is further configured to prompt the user of a network sharing status, wherein the network sharing status comprises that cellular mobile network sharing is enabled or WLAN sharing is enabled.

13. A method for providing wireless network access, comprising:
receiving, by a first electronic device, a first operation of a user, and establishing a Wi-Fi direct connection to a second electronic device in response to the first operation, wherein the first operation is used to share or project first data in the first electronic device to the second electronic device;
receiving, by the second electronic device, the first data from the first electronic device;
receiving, by the first electronic device, a second operation of the user, and enabling a network sharing function in response to the second operation, wherein the second operation is used to enable the network sharing function of the first electronic device; and
performing, by the second electronic device, data receiving and sending with a network side by using the network sharing function of the first electronic device.

14. The method according to claim 13, wherein the first operation comprises an operation of selecting the first data, an operation of enabling a sharing control, and an operation of selecting the second electronic device as a receiving device.

15. The method according to claim 13, wherein the second operation comprises an operation of enabling a network sharing control.

16. The method according to any one of claims 13 to 15, wherein the first electronic device comprises a Wi-Fi module, the Wi-Fi module comprises a wide area network WAN interface and a local area network LAN interface, and the local area network LAN interface is a Wi-Fi peer-to-peer P2P interface; and the first electronic device accesses a cellular mobile network or a wireless local area network WLAN through the WAN interface;
the receiving, by a first electronic device, a first operation of a user, and establishing a Wi-Fi direct connection to a second electronic device in response to the first operation comprises:
receiving, by the first electronic device, the first operation of the user, and establishing the Wi-Fi direct connection to the second electronic device in response to the first operation through the Wi-Fi P2P interface; and
the performing, by the second electronic device, data receiving and sending with a network side by using the network sharing function of the first electronic device comprises:
if a destination address of second data on the network side that is received from the WAN interface is the second electronic device, forwarding the second data to the Wi-Fi P2P interface, and sending the second data to the second electronic device through the Wi-Fi P2P interface; and if a destination address of third data that is received from the second electronic device through the Wi-Fi P2P interface is the network side, forwarding the third data to the WAN interface, and sending the third data to the network side through the WAN interface.

17. A method for providing wireless network access, comprising:
accessing, by a first electronic device, a cellular mobile network or a wireless local area network WLAN;
receiving, by the first electronic device, a third operation of a user, establishing a wireless connection to a second electronic device in response to the third operation, and enabling a network sharing function; and
performing, by the second electronic device, data receiving and sending with a network side by using the network sharing function of the first electronic device.

18. The method according to claim 17, wherein the establishing a wireless connection to a second electronic device in response to the third operation comprises:
if the first electronic device accesses the cellular mobile network, establishing, by the first electronic device, a wireless hotspot connection to the second electronic device in response to the third operation; and if the first electronic device accesses the WLAN, establishing, by the first electronic device, a Wi-Fi direct connection to the second electronic device in response to the third operation; or
if the first electronic device accesses the cellular mobile network, establishing, by the first electronic device, a Wi-Fi direct connection to the second electronic device in response to the third operation; and if the first electronic device accesses the WLAN, establishing, by the first electronic device, a wireless hotspot connection to the second electronic device in response to the third operation.

19. A first electronic device providing wireless network access, wherein the first electronic device receives a first operation of a user, and establishes a Wi-Fi direct connection to a second electronic device in response to the first operation, wherein the first operation is used to share or project first data in the first electronic device to the second electronic device;
the first electronic device sends the first data to the second electronic device; and
the first electronic device receives a second operation of the user, and enables a network sharing function in response to the second operation, wherein the second operation is used to enable the network sharing function of the first electronic device, and the network sharing function of the first electronic device is used to implement data receiving and sending between the second electronic device and a network side.

20. A first electronic device providing wireless network access, wherein the first electronic device accesses a cellular mobile network or a wireless local area network WLAN, and the first electronic device receives a third operation of a user, establishes a wireless connection to a second electronic device in response to the third operation, and enables a network sharing function, wherein the network sharing function of the first electronic device is used to implement data receiving and sending between the second electronic device and a network side.
